# EUROPEAN PATENT SPECIFICATION

(11) **EP 1 572 788 B1**
(45) Date of publication and mention of the grant of the patent: **09.11.2011**
(21) Application number: 03814221.2
(22) Date of filing: 17.12.2003
(51) Int. Cl.: C08J 7/14, C23C 18/24, C08L 59/02

(54) **SURFACE TREATMENT OF POLYACETAL ARTICLES**
OBERFLÄCHENBEHANDLUNG VON POLYACETALGEGENSTÄNDEN
TRAITEMENT DE SURFACE D'ARTICLES CONSTITUES DE POLYACETALS

(30) Priority: 20.12.2002 EP 02406122
(43) Date of publication of application: 14.09.2005
(73) Proprietor: E.I. DU PONT DE NEMOURS AND COMPANY, Wilmington, DE 19898 (US)
(72) Inventor: PORTNER, Jean-Claude, F-91260 Juvisy Sur Orge (FR); SCARAMUZZINO, Pascal, CH-1004 Luasanne (CH)
(74) Representative: Morf, Jan Stefan
(86) International application number: PCT/US2003/040621
(87) International publication number: WO 2004/058863

(56) References cited:
- DE-A- 2 306 702
- FR-A- 2 703 074
- GB-A- 2 091 274
- US-A- 4 415 406

## Description

### Field of the Invention

This invention relates to the surface treatment of polyacetal articles by etching to prepare the surface for subsequent treatments such as plating and painting.

### Background of Invention

Polyacetals (sometimes referred to as acetal resins) are a class of polyoxymethylene compositions described for example in US Patents 5,318,813, 5,344,882 and 5,286,807. Polyacetal resins are commercialized *inter alia* by E.I. du Pont de Nemours and Company, Wilmington, Delaware, USA under the Trade Mark DELRIN®.

Polyoxymethylene compositions (polyacetals) are generally understood to include compositions based on homopolymers of formaldehyde or of cyclic oligomers of formaldehyde, for example trioxane, the terminal groups of which are end-capped by esterification or etherification, as well as copolymers of formaldehyde or of cyclic oligomers of formaldehyde, with oxyalkylene groups with at least two adjacent carbon atoms in the main chain, the terminal groups of which copolymers can be hydroxyl terminated or can be end-capped by esterification or etherification.

The polyoxymethylene can be a homopolymer, a copolymer or a mixture thereof.

Compositions based on polyoxymethylene of relatively high molecular weight, i.e. 20,000 to 100,000 are useful in preparing semifinished and finished articles by any of the techniques commonly used with thermoplastic materials, e.g. compression molding, injection molding, extrusion, blow molding, rotational molding, melt spinning, stamping and thermoforming. Finished products made from such compositions possess extremely desirable physical properties, including high stiffness, strength, chemical stability and solvent resistance.

Polyacetal as used herein includes polyacetal homopolymer and copolymer having different compositions and blends containing various kinds of compounds as additives, including blends with TPU (U.S. Patent 5,286,807), blends with TPU and amorphous thermoplastic polymers selected from styrenics, polyamides, polyarylates, polyphenylene ethers, polysulfones and acrylics (U.S. Patent 5,318,813), and blends with TPU and a thermoplastic crystalline polymer including polyamide, polypropylene and polyalkylene terephthalates (U.S. Patent 5,344,882). The polyacetal usually makes up at least 45 weight % of the blend and for many applications 80 or 90 weight% or more.

It is known that molded articles made of polyacetals - which are highly chemically stable and crystalline - are more difficult to decorate, overmold and more particularly to metallize (by vacuum deposition) or plate (electroless plating or galvanoplating) or paint than other molded plastics materials.

The difficulty of metallizing polyacetal articles is for example described in GB-A 2 091 274, which proposed a preliminary surface treatment by acid etching, for instance using a mixture of 30-60 weight% sulfuric acid, 5-30 weight% hydrochloric acid and 65-10 weight% water; or 20-50 weight% sulfuric acid, 30-50 weight% phosphoric acid and 50-0 weight% water. Mixtures of organic and inorganic acids were also envisaged: After the acid etching, the articles were dipped in a neutralizing solution, undercoated with an urethane paint, metallized by cathodic sputtering and painted with a top coat of an acrylic urethane paint or an acrylic ester paint system.

French Patent Specification FR-A-2,703,074 describes the preliminary surface treatment of polyacetal articles to prepare them for plating, by etching with a mixed acid bath of sulfuric; phosphoric and hydrochloric acids in the amounts 30 vol% sulfuric acid (96/98% purity), 20 vol% phosphoric acid (85% purity), 5 vol% hydrochloric acid (35/37% purity) and 45 vol% water. This process, which was operated at temperatures in the range 26 to 35°C, has given acceptable results that represent an improvement over the other prior art. However it leads to a non-negligible percentage of rejects, due to the fact that the process has a narrow operating window during which homogeneous etching can be obtained, and it also poses problems with emanated vapors and the formation of salts on the surface of the molded articles. Moreover, the process has been moderately successful on a small scale for the plating of articles made of polyacetal copolymers, but its implementation on an industrial scale was not satisfactory due to the noted constraints. Furthermore, the use of this process for the direct application of decorative paints to polyacetal articles has been problematic.

Despite the difficulties encountered to date, it is extremely desirable to surface treat polyacetal articles in particular for applications where the surface appearance is important, and there is therefore a need for an improved process for preparing the surface of polyacetal articles for subsequent treatments.

### Summary of the Invention

The invention provides a process for etching the surface of polyacetal articles to prepare the surface for subsequent treatments such as electroless plating, galvanoplating, metallization, painting and overmolding, by immersing the articles in a mixed acid bath containing the following four acids and water in the following quantities and proportions:
28 to 39 weight% of sulfuric acid and 25 to 32 weight% of phosphoric acid, wherein the ratio by weight of sulfuric acid to phosphoric acid is in the range from 0.9 to 1.5;
3 to 10 weight% hydrochloric acid and 3 to 14 weight% acetic acid, wherein the ratio by weight of hydrochloric acid to acetic acid is in the range 0.25 to 3.0; and
5 to 41 weight% water.

Usually the process is run at a temperature in the range 20 to 40°C for a maximum duration of 60 minutes, preferably at a temperature in the range 25 to 35°C for a duration of 5 to 40 minutes or 10 to 30 minutes depending on the final application, for instance plating or painting.

The above indicated quantities correspond to the usual commercial grades of the given acids, namely sulphuric acid of 95/98% purity, density about 1.83g/cm³; phosphoric acid about 85% purity, density about 1.70 g/cm³; hydrochloric acid about 32/36% purity, density about 1.17 g/cm³; and acetic acid about 98% purity, density about 1.05 g/cm³. If acids of different purity/density are used, the corresponding adjustment of its quantity can be calculated accordingly.

The mixed acid composition of the etching bath according to the invention has been successfully used for articles molded from polyacetal copolymers and equally homopolymers. The process of the invention has a much broader processing "window" than the prior baths, corresponding to a more progressive etching action resulting in a substantial reduction of rejects. The increased processing window corresponds to a longer period and hence a more accurate control during which etching remains homogeneous, so the process can be used to homogeneously etch a wide variety of articles of different polyacetal compositions and of different regular or complex shapes with few rejects. Furthermore, the problem of emanated vapors is considerably attenuated, due notably to the fact that the new process can be operated smoothly at a lower temperature and/or a longer time than the prior art baths to obtain homogeneous etching. Moreover, the new process has been applied successfully as a pretreatment for electroless plating and galvanoplating and also for the application of paints without plating/metallization. In summary, the new process is unexpectedly better in its performance and more versatile, leading to a wider range of applications, and is compatible with the environment.

Preferably, the mixed acid bath contains 32 to 36 weight% sulfuric acid; 27 to 30 weight% phosphoric acid, 4-6 weight% hydrochloric acid, 6-10 weight% acetic acid and 18-31 weight% water. The ratio of sulfuric acid to phosphoric acid is preferably in the range 1.0 to 1.4, even more preferably in the range 1.1 to 1.3, and the ratio of hydrochloric acid to acetic acid is preferably in the range 0.4 to 1.0, even more preferably in the range 0.5 to 0.6.

Etching is normally followed by a neutralization step and rinsing, and the polyacetal articles are then ready for further treatments such as plating, painting, overmolding, or other process steps where good adhesion to polyacetal is important.

The invention also concerns a process for plating polyacetal articles comprising etching the articles as set out above and subjecting them to neutralization/rinsing as needed, followed by applying a plating directly on the etched surface or on an intermediate coat applied to the etched surface, for instance an electroless metal coat followed by a galvanoprocess.

Another aspect of the invention is a process for painting polyacetal articles comprising etching the articles as set out above, followed by applying an organic paint directly on the etched surface. Varnish often referred to as topcoat, can also be applied, in particular on top of a paint layer giving excellent gloss, flexibility, durability, UV resistance, chemical resistance and so on.

A further aspect of the invention is a mixed acid etching bath for etching the surface of polyacetal articles to prepare the surface for subsequent treatments, containing the given four acids and water in the quantities and proportions indicated above and further explained below.

### Brief Description of the Drawings

The accompanying drawings illustrate the results of a set of comparative examples, reported below. In the drawings:
Fig. 1 is an SEM micrograph of the surface of a polyacetal article etched for 5 minutes in a prior art etching bath;
Fig. 2 is a similar SEM micrograph of the surface of an identical polyacetal article etched for 5 minutes in a mixed acid etching bath according to the invention;
Fig. 3 is an SEM micrograph of the surface of the polyacetal article etched for 20 minutes in a prior art etching bath;
Fig. 4 is a similar SEM micrograph of the surface of the identical polyacetal article etched for 20 minutes in the mixed acid etching bath according to the invention; and
Fig. 5 is a graph of the estimated sizes of holes produced by the etching versus etching duration in the prior art bath and in that according to the invention, also with an illustration of the respective processing windows.

### Detailed Description

As discussed above, the surface of polyacetal articles is etched to prepare the surface for subsequent treatments such as electroless plating, galvanoplating, metallization, painting and overmolding, by immersing the articles in a mixed acid bath containing the given four acids and water in the specified quantities and proportions, usually at a temperature in the range 20 to 40°C for a maximum duration of 60 minutes, preferably at a temperature in the range 25 to 35°C for a duration of 5 to 40 minutes or 10 to 30 minutes depending on the final application.

The temperature and time of the etching treatment are correlated. Lower temperatures (20 to 30°C) have corresponding longer treatment time, but have greater tolerance for deviations in molding, more particularly deviations resulting from poor molding, high temperature of the melt, intensive shear, orientation, flow lines and/or other defects of the molded articles, that might induce the stress cracking of the polyacetals. At higher temperatures (from just below 35°C or above) there is a loss of acetic acid and hydrochloric acid which needs to be compensated to maintain the required bath composition. Higher temperatures lead to shorter treatment times, 20 minutes or less depending upon the composition of the polyacetal, but the risk of stress cracking the polyacetal article being etched is increased.

The indicated treatment times are the immersion times in the etching bath. The total treatment time consists of the sum of the introduction time, immersion time, time for removal of the articles on racks and draining time, time for transfer to the static rinse, and static rinse time. However it is in the immersion time that the process according to the invention improves over the prior etching processes, by providing a larger processing window throughout which etching remains homogeneous.

For comparison, according to the applicant's knowledge, the best available prior art mixed acid etching bath according to FR-A-2,703,074 contains sulfuric to phosphoric acid in a ratio 1.5 by volume (i.e. a ratio of 1.62 by weight), contains 5 vol% hydrochloric acid (no acetic acid) and 45 vol% water. Such prior art bath has a much narrower processing window for obtaining homogeneous etching, for instance about 2 to less than 10 minutes at 30°C compared to 3 to over 30 minutes for the process according to the invention, as demonstrated by the Comparative Example below.

The etching bath according to the invention has a calculated specific gravity in the range 1.33 to 1.48 g/cm³, the optimal value of the specific gravity being in the range 1.38 to 1.42 g/cm³, in particular about 1.40 g/cm³. With a bath of this specific gravity at 25°C, the treatment time for most polyacetals is in the region of about 20 minutes. A high specific gravity towards the limiting value 1.48 g/cm³ leads to a reduction of the process tolerances and is associated with shorter treatment times and stronger etching. A low specific gravity approaching 1.33 g/cm³ is associated with longer treatment times and leads to higher treatment temperatures in order to keep an acceptably low treatment time. Baths of low specific gravity also lead to lower wetting of the polyacetal surface making the etching inoperative for certain molded articles.

For comparison, the etching bath of FR-A-2,703,074 has a specific gravity of approximately 1.45-1.47 g/cm³. The lower value of the more preferred specific gravity range of 1.38 to 1.42 g/cm³ means that the polyacetal articles are less buoyant which contributes to lowering the percentage of rejects when the articles are loosely immersed in the etching bath, for example when articles are placed in a basket for dipping in a bath.

During etching, the bath is preferably mechanically agitated for example by using magnetic stirrers, taking care to avoid air bubbles. This helps to make the etching of the articles uniform.

Because of its specific composition, there is no need to filter the etching bath of the invention during processing. Minerals and additives from the polyacetals are eliminated in the drag out of the etched parts. For this reason, a static rinse is recommended after the articles are removed from the etching bath.

The molded polyacetal articles to be etched are preferably attached on racks or are placed in titanium baskets. The racks can be coated with an inert PVC coating to which the articles are attached by stainless steel or titanium clamps. Several small articles devoid of blind recesses can be placed loosely in a titanium basket. Because the density of the polyacetal articles is close to the low specific gravity of the bath, such loose pieces can be successfully etched even though they are freely submerged. Titanium baskets or plastic-coated stainless steel baskets can be used to hold larger polyacetal articles.

The polyacetal articles can be arranged in rows in successive layers in a basket, enabling large surface areas to be treated in a reduced bath volume. Such loose arrangement reduces the mechanical stress applied to the polyacetal articles compared to when individual article holders are used during etching. Using such an arrangement also facilitates the removal of faulty etched articles before electrolysis, i.e. in the case where the articles are subjected to electroless plating followed by galvanoplating. The same arrangement could be used for pre-treating the articles by chemical deposition, for later galvanoplating, overmolding, or other treatments.

The etching bath according to the invention should be contained in a suitable vat. A reinforced vat coated with PVDF (polyvinylidene fluoride) is recommended. A vat of high density polypropylene can be used for small volumes. A reinforced vat internally coated with titanium is also suitable. A vat made of stainless steel alone is not suitable because of the presence of hydrochloric acid in the bath.

The etching bath according to the invention is safe to use and compatible with the environment. The emanation of fumes is reduced due to the lower temperature at which the bath can operate. The bath components removed by static rinsing can be recycled by reverse osmosis, by ion-exchange processes or by evaporation-concentration. Effluents from the process can be treated by simple chemical neutralization followed by filter-press treatment.

The invention is further described by way of example, as follows.

### Preparation of the Mixed Acid Etching Bath

The different acids in the given proportions are mixed taking precautions to protect the eyes and hands. The specific gravity of the final solution, as measured by a densimeter at room temperature (20°C) is in the range 1.334 to 1.474 g/cm³, more preferably in the range 1.38 to 1.42 g/cm³,and optimally about 1.40 g/cm³.

The acids used are of the following commercial grades: concentrated sulfuric acid, specific gravity 1.83 g/cm³, around 95 to 98% purity; concentrated orthophosphoric acid, specific gravity 1.70 g/cm³, around 85% purity; concentrated hydrochloric acid, specific gravity 1.17 g/cm³, around 32 to 36% purity; and concentrated acetic acid about 98% purity, crystallizable grade.

A mixed acid etching bath of the following composition, given by way of example, was prepared for the comparative testing reported below: sulfuric acid 34.5 weight%; phosphoric acid 29.0 weight%; hydrochloric acid 4.5 weight%; acetic acid 8.5 weight% and water 23.5 weight%. In this example the weight ratio of sulfuric to phosphoric acid is 1.18 and the weight ratio of hydrochloric to acetic acid is 0.52.

### Etching of Polyacetal Articles for Plating

The molded polyacetal articles to be plated are cleaned by dipping them in a cleaner bath with a surfactant at weak alkaline pH (like PM 900 available from Shipley SAS of Paris, France), at a temperature up to 50°C for 2 to 3 minutes, then rinsing with water prior to etching.

Etching in the mixed acid bath according to the invention is conveniently at 25 to 35°C for 10 to 30 minutes. Colder conditions require a longer treatment. The solution can be stirred to uniformize etching of the polyacetal surface. During etching, fumes are exhausted for safety and air control.

After removal from the etching bath the articles are subjected to a rinse in water where acid drag-out can, if wanted, be recovered by reverse osmosis. The articles are then neutralized either with a 20ml/l ammonium solution or a 10 g/l sodium hydroxide solution, both at room temperature for a duration of 1 about minute while stirring.

The articles are then rinsed with water and, prior to electroless plating, are dipped in a solution of 10% HCI at room temperature for about 1 minute.

The surfaces are then catalyzed with a palladium colloid, for instance catalyst 9F available from Shipley SAS, in a solution containing 50 to 100 ppm of palladium at a temperature of 25 to 28°C for 1 to 5 minutes. When a different catalyst is used the conditions are adjusted: for example, the treatment is at a temperature of 35-40°C for catalyst DP, available from Shipley SAS. This treatment is carried out with mechanical agitation or stirring.

The articles are then rinsed again with water and treated with an accelerator such as the formulation PM 964 from Shipley SAS, to remove stannous compounds and enhance the catalytic power of the palladium. This treatment takes place at 40 to 45°C for 2 to 4 minutes or longer if necessary, and is followed by another water rinse.

The articles are next immersed in an electroless nickel plating bath such as the bath PM 980 available from Shipley SAS, at a concentration of 70% or 2.4 g/l of nickel and at a temperature of 25 to 35°C while maintaining a pH of 8.8 to 9 by the addition of ammoniac. A duration of 8 to 12 minutes provides a nickel layer of 0.25 to 0.3 micron.

The quality of the electroless nickel deposit can be inspected using a magnifying glass, and the conditions adjusted as necessary.

The articles with the electroless nickel plating are ready for galvanoplating for example with nickel using a conventional Watts bath, or with chromium also using a conventional bath.

Alternatively, the electroless nickel coating can be replaced by an electroless copper coating, followed by galvanoplating with nickel, chromium or any other metal.

For direct plating, the samples previously treated in catalyst and in an accelerator, as described above, are immersed in a depassivating solution such as 5 weight% sulfuric acid and then directly coated with a regular electroplating.

During long-term operation, the etching bath is periodically checked, e.g. by measuring its specific gravity each day. Fresh concentrated acids are added periodically to compensate for "drag-out" losses. The contamination of the bath with metals from the associated jigs (stainless steel and copper or nickel) is measured periodically, say each month.

Compared to the prior art etching bath of FR-A-2,703,074, the etching bath according to the invention can be operated at lower temperatures for the same or a longer treatment period leading to a higher flexibility/tolerance (wider processing window) in the process and/or a better control of the treated articles, when operated at the same temperature.

### Etching of Polyacetal Articles for Painting

For subsequent painting treatments, the process can be modified as follows. The acid etch according to the invention is preceded by cleaning and rinsing, or by annealing, cooling, cleaning and rinsing. Etching is followed by rinsing under water, neutralization, cold rinsing and hot rinsing. The etched parts to be painted are then dried, loaded onto supports in a painting line, painted with an organic paint and a top coat if necessary, cured, and then unloaded and inspected.

Typical paint coatings that can be applied are water borne, solvent borne, 100% solvent paint systems (e.g. UV curable) and powder coats. The coatings can be crosslinked, non-crosslinked or partially crosslinked (thermoset or thermoplastic). The coatings can be heat cured or cured/dried through irradiation such as electron beam, UV, NIR and IR. Examples of binders used in the paints are alkyds, polyesters, acrylics, vinyl, cellulose acetate butyrate, nitrocellulose, epoxies, polyamides, polyamines and polyurethanes. Examples of paint crosslinkers used are melamine formaldehyde, urea formaldehyde, benzoguanamine formaldehyde based or polyisocyanates. If the paint systems are solvent borne, typical solvents include alcohols, ketones, ethers, acetates, aromatics, amide but are not limited to these.

For alternative decoration, the process can be modified as follows. The acid etch according to the invention is preceded by cleaning and rinsing, or by annealing, cooling, cleaning and rinsing. Etching is followed by rinsing under water, neutralization, cold rinsing and hot rinsing. The etched parts to be decorated are then dried, coated with an organic paint, preferably a UV cross-linkable paint system, and then loaded into a metal vacuum deposition apparatus in which a metal layer, preferably an aluminum layer, of about 0.2 microns thickness is vapor deposited over the paint. Finally, a topcoat, preferably a UV cross-linkable paint system, with a thickness of about 5 to 15 microns is applied over the metal layer.

### Comparative Tests

Articles in the form of ski bindings made of polyacetal base resin (Delrin® 100BK, available from E.I. du Pont de Nemours) were molded using a conventional injection molding machine with processing conditions set to avoid degradation of the molded articles. The samples were allowed to stand for at least 24 hours after molding, then annealed prior to immersion in a mixed acid etching bath.

One mixed acid etching bath was prepared according to FR-A-2,703,074, as described above. This is considered by the applicant to be the best prior art mixed acid etching bath. Another mixed acid etching bath according to the invention corresponded to the specific example described above.

The parts were immersed for 5 to 40 minutes in the respective mixed acid etching baths at 30°C, and specimens were removed and examined after 5 minutes, 10 minutes 20 minutes 30 minutes and 40 minutes. Representative regions of the articles' surface were cut off and subjected to SEM (Secondary Electron Microscopy) observations.

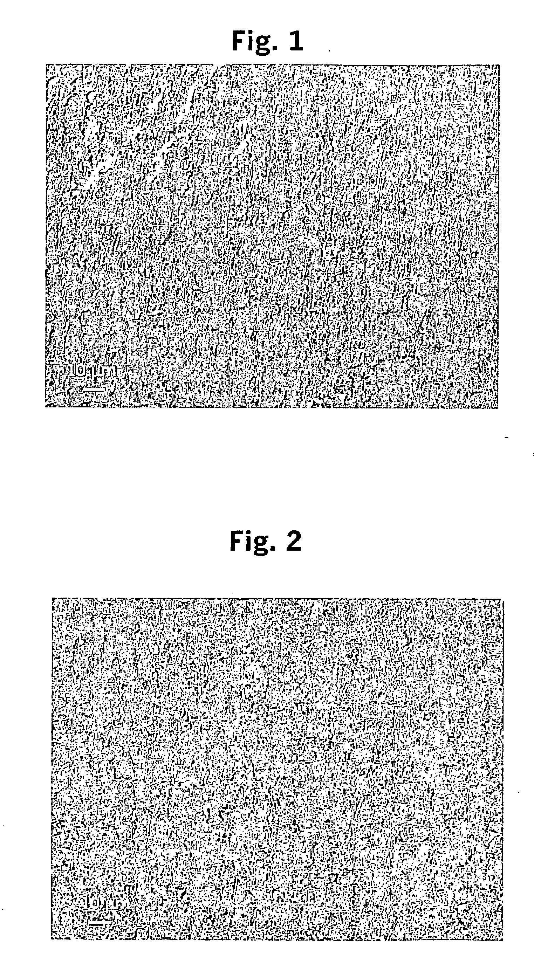

Figures 1 and 2 are SEM micrographs (magnification 500x) of the surfaces after 5 minutes etching. It can be seen that the holes in the surfaces of both samples are of comparable size (the white markings on Fig. 1 are generated by electronic charging, in part from the formation of salts). The size of the holes is below 5 micron. At this stage, the etching in both baths is homogeneous.

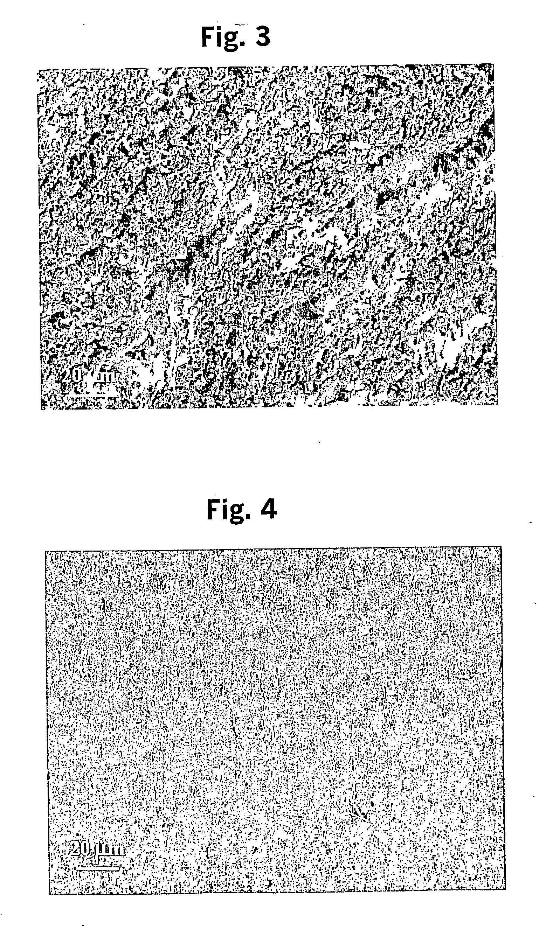

Figures 3 and 4 are SEM micrographs (magnification 500x) of the surfaces after 20 minutes etching. It can be seen that severe and deep cracks are visible for the specimen subjected to etching in the prior art bath (Fig. 3). The estimated size of the holes and cracks is approximately 100 micron. By comparison, the holes in the article etched in the mixed acid bath according to the invention (Fig. 4) have not developed noticeably, and are still of the order of 5 - 7 micron, indicating that the etching is still homogeneous.

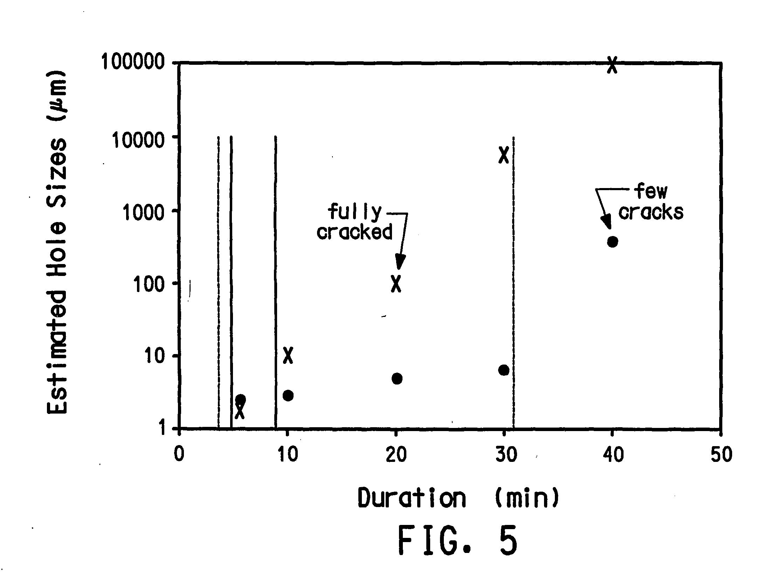

The estimated sizes of the holes in the different specimens are plotted on the graph of Figure 5 as a function of the etching duration. The hole sizes for the prior art etch are indicated by "x" and those for the etch according to the invention by " ". It can be seen that the prior art etch was already inhomogeneous at 10 minutes and led to excessive damage at 30 minutes. Comparatively, the etch according to the invention remained homogeneous for over 30 minutes, and only a few cracks became visible after 40 minutes. This means the inventive etching process has a wide processing window, illustrated by the dotted vertical lines, from approximately 3 to 30 minutes in this example, whereas the prior art etch has a much narrower processing window, from approximately 2 to less than 10 minutes, indicated by the plain vertical lines.

This wide processing window leads to substantial advantages, as discussed above. Notably, the etch and etching process of the invention enables the homogeneous etching of a wide variety of articles of different polyacetal compositions and of different regular or complex shapes with few rejects.

## Claims

1. A process for etching the surface of polyacetal articles to prepare the surface for subsequent treatments by immersing the articles in a mixed acid bath containing the following four acids and water in the following quantities and proportions:
28. to 39 weight% of sulfuric acid and 25 to 32 weight% of phosphoric acid, wherein the ratio by weight of sulfuric acid to phosphoric acid is in the range from 0.9 to 1.5;
3 to 10 weight% hydrochloric acid and 3 to 14 weight% acetic acid, wherein the ratio by weight of hydrochloric acid to acetic acid is in the range 0.25 to 3.0; and
5 to 41 weight% water.

2. The process of claim 1 wherein the mixed acid bath contains 32 to 36 weight% sulfuric acid; 27 to 30 weight% phosphoric acid, 4 to 6 weight% hydrochloric acid, 6 to 10 weight% acetic acid and 18 to 31 weight% water.

3. The process of claim 1, wherein the ratio of sulfuric acid to phosphoric acid is in the range 1.0 to 1.4, and the ratio of hydrochloric acid to acetic acid is in the range 0.4 to 1.0.

4. The process of claim 3, wherein the ratio of sulfuric acid to phosphoric acid is in the range 1.1 to 1.3, and the ratio of hydrochloric acid to acetic acid is in the range 0.5 to 0.6.

5. The process of claim 1 wherein the mixed acid bath has a specific gravity at room temperature in the range 1.33 to 1.48 g/cm³.

6. The process of claim 5 wherein the mixed acid bath has a specific gravity at room temperature in the range 1.38 to 1.42 g/cm³.

7. The process of claim 1 wherein the articles are immersed in the mixed acid bath at a temperature in the range 20 - 40°C for a duration up to 60 minutes.

8. The process of claim 7 wherein the articles are immersed in the mixed acid bath at a temperature in the range 25 - 35°C for a duration from 5 minutes to 40 minutes.

9. The process of claim 1, wherein the etching is followed by a neutralization step and rinsing.

10. A process for plating polyacetal articles comprising etching the articles as claimed in claim 1, followed by applying a plating directly on the etched surface

11. A process for plating polyacetal articles comprising etching the articles as claimed in claim 1, applying an electroless plating directly on the etched surface and applying an electroplate on the electroless plating.

12. A process for decorating polyacetal articles comprising etching the articles as claimed in claim 1, followed by applying an organic paint directly on the etched surface.

13. The process of claim 12, comprising applying a topcoat of varnish on the paint.

14. The process of claim 12, followed by the step of applying a metal layer over the organic paint by means of metal vacuum deposition.

15. A mixed acid etching bath for etching the surface of poyacetal articles to prepare the surface for subsequent treatments, containing the following four acids and water in the following quantities and proportions:
28 to 39 weight% of sulfuric acid and 25 to 32 weight% of phosphoric acid, wherein the ratio by weight of sulfuric acid to phosphoric acid is in the range from 0.9 to 1.5;
3 to 10 weight% hydrochloric acid and 3 to 14 weight% acetic acid, wherein the ratio by weight of hydrochloric acid to acetic acid is in the range 0.25 to 3.0; and
5 to 41 weight% water.

16. The bath of claim 15 which contains 32 to 36 weight% sulfuric acid; 27 to 30 weight% phosphoric acid, 4 to 6 weight% hydrochloric acid, 6 to 10 weight% acetic acid and 18 to 31 weight% water.

17. The bath of claim 15, wherein the ratio of sulfuric acid to phosphoric acid is in the range 1.0 to 1.4, and the ratio of hydrochloric acid to acetic acid is in the range 0.4 to 1.0.

18. The bath of claim 17, wherein the ratio of sulfuric acid to phosphoric acid is in the range 1.1 to 1.3, and the ratio of hydrochloric acid to acetic acid is in the range 0.5 to 0.6.

19. The bath of claim 15 which has a specific gravity at room temperature in the range 1.33 to 1.48 g/cm³.

20. The bath of claim 19 which has a specific gravity at room temperature in the range 1.38 to 1.42 g/cm³.

## Patentansprüche

1. Verfahren zum Ätzen der Oberfläche von Polyacetalgegenständen, um die Oberfläche für spätere Behandlungen vorzubereiten, indem die Gegenstände in ein Mischsäurebad eingetaucht werden, das die folgenden vier Säuren und Wasser in den folgenden Mengen und Verhältnissen enthält:
28 bis 39 Gew.-% Schwefelsäure und 25 bis 32 Gew.-% Phosphorsäure, wobei das Gewichtsverhältnis von Schwefelsäure zu Phosphorsäure im Bereich von 0,9 bis 1,5 liegt;
3 bis 10 Gew.-% Salzsäure und 3 bis 14 Gew.-% Essigsäure, wobei das Gewichtsverhältnis von Salzsäure zu Essigsäure im Bereich von 0,25 bis 3,0 liegt; und
5 bis 41 Gew.-% Wasser.

2. Verfahren nach Anspruch 1, wobei das Mischsäurebad 32 bis 36 Gew.-% Schwefelsäure; 27 bis 30 Gew.-% Phosphorsäure; 4 bis 6 Gew.-% Salzsäure, 6 bis 10 Gew.-% Essigsäure und 18 bis 31 Gew.-% Wasser enthält.

3. Verfahren nach Anspruch 1, wobei das Verhältnis von Schwefelsäure zu Phosphorsäure im Bereich von 1,0 bis 1,4 liegt und das Verhältnis von Salzsäure zu Essigsäure im Bereich von 0,4 bis 1,0 liegt.

4. Verfahren nach Anspruch 3, wobei das Verhältnis von Schwefelsäure zu Phosphorsäure im Bereich von 1,1 bis 1,3 liegt und das Verhältnis von Salzsäure zu Essigsäure im Bereich von 0,5 bis 0,6 liegt.

5. Verfahren nach Anspruch 1, wobei das Mischsäurebad ein spezifisches Gewicht bei Raumtemperatur im Bereich von 1,33 bis 1,48 g/cm³ aufweist.

6. Verfahren nach Anspruch 5, wobei das Mischsäurebad ein spezifisches Gewicht bei Raumtemperatur im Bereich von 1,38 bis 1,42 g/cm³ aufweist.

7. Verfahren nach Anspruch 1, wobei die Gegenstände für eine Dauer bis zu 60 Minuten bei einer Temperatur im Bereich von 20 - 40°C in das Mischsäurebad getaucht werden.

8. Verfahren nach Anspruch 7, wobei die Gegenstände für eine Dauer von 5 Minuten bis 40 Minuten bei einer Temperatur im Bereich von 25 - 35°C in das Mischsäurebad getaucht werden.

9. Verfahren nach Anspruch 1, wobei auf das Ätzen ein Neutralisierungsschritt und ein Spülschritt folgen.

10. Verfahren zum Metallisieren von Polyacetalgegenständen, das aufweist: Ätzen der Gegenstände nach Anspruch 1 und anschließendes Aufbringen einer Metallisierung direkt auf die geätzte Oberfläche.

11. Verfahren zum Metallisieren von Polyacetalgegenständen, das aufweist: Ätzen der Gegenstände nach Anspruch 1, stromloses Aufbringen einer Metallisierung direkt auf die geätzte Oberfläche und Aufbringen eines galvanischen Überzugs auf die stromlos aufgebrachte Metallisierung.

12. Verfahren zum Dekorieren von Polyacetalgegenständen, das aufweist: Ätzen der Gegenstände nach Anspruch 1 und anschließendes Aufbringen einer organischen Farbe direkt auf die geätzte Oberfläche.

13. Verfahren nach Anspruch 12 mit Aufbringen eines Lacküberzugs auf die Farbe.

14. Verfahren nach Anspruch 12, gefolgt von einem Schritt zum Aufbringen einer Metallschicht über der organischen Farbe mittels Vakuumaufdampfung von Metall.

15. Mischsäure-Ätzbad zum Ätzen der Oberfläche von Polyacetalgegenständen zur Vorbehandlung der Oberfläche für spätere Behandlungen, wobei das Bad die folgenden vier Säuren und Wasser in den folgenden Mengen und Verhältnissen enthält:
28 bis 39 Gew.-% Schwefelsäure und 25 bis 32 Gew.-% Phosphorsäure, wobei das Gewichtsverhältnis von Schwefelsäure zu Phosphorsäure im Bereich von 0,9 bis 1,5 liegt;
3 bis 10 Gew.-% Salzsäure und 3 bis 14 Gew.-% Essigsäure, wobei das Gewichtsverhältnis von Salzsäure zu Essigsäure im Bereich von 0,25 bis 3,0 liegt; und
5 bis 41 Gew.-% Wasser.

16. Bad nach Anspruch 15, das 32 bis 36 Gew.-% Schwefelsäure; 27 bis 30 Gew.-% Phosphorsäure; 4 bis 6 Gew.-% Salzsäure, 6 bis 10 Gew.-% Essigsäure und 18 bis 31 Gew.-% Wasser enthält.

17. Bad nach Anspruch 15, wobei das Verhältnis von Schwefelsäure zu Phosphorsäure im Bereich von 1,0 bis 1,4 liegt und das Verhältnis von Salzsäure zu Essigsäure im Bereich von 0,4 bis 1,0 liegt.

18. Bad nach Anspruch 17, wobei das Verhältnis von Schwefelsäure zu Phosphorsäure im Bereich von 1,1 bis 1,3 liegt und das Verhältnis von Salzsäure zu Essigsäure im Bereich von 0,5 bis 0,6 liegt.

19. Bad nach Anspruch 15, das ein spezifisches Gewicht bei Raumtemperatur im Bereich von 1,33 bis 1,48 g/cm³ aufweist.

20. Bad nach Anspruch 19, das ein spezifisches Gewicht bei Raumtemperatur im Bereich von 1,38 bis 1,42 g/cm³ aufweist.

## Revendications

1. Procédé de gravure de la surface d'articles en polyacétal pour préparer la surface pour des traitements ultérieurs par immersion des articles dans un bain d'acides mixte contenant les quatre acides suivants et de l'eau selon les quantités et les proportions suivantes:
28 à 39 % en poids d'acide sulfurique et 25 à 32 % en poids d'acide phosphorique, dans lequel le rapport en poids de l'acide sulfurique sur l'acide phosphorique se situe dans la plage de 0,9 à 1,5;
3 à 10 % en poids d'acide chlorhydrique et 3 à 14 % en poids d'acide acétique, dans lequel le rapport en poids de l'acide chlorhydrique à l'acide acétique se situe dans la plage de 0,25 à 3,0; et
5 à 41 % en poids d'eau.

2. Procédé selon la revendication 1, dans lequel le bain d'acides mixte contient 32 à 36 % en poids d'acide sulfurique; 27 à 30 % en poids d'acide phosphorique, 4 à 6 % en poids d'acide chlorhydrique, 6 à 10 % en poids d'acide acétique et 18 à 31 % en poids d'eau.

3. Procédé selon la revendication 1, dans lequel le rapport de l'acide sulfurique à l'acide phosphorique se situe dans la plage de 1,0 à 1,4, et le rapport de l'acide chlorhydrique à l'acide acétique se situe dans la plage de 0,4 à 1,0.

4. Procédé selon la revendication 3, dans lequel le rapport de l'acide sulfurique à l'acide phosphorique se situe dans la plage de 1,1 à 1,3, et le rapport de l'acide chlorhydrique à l'acide acétique se situe dans la plage de 0,5 à 0,6.

5. Procédé selon la revendication 1 dans lequel le bain d'acides mixte a une densité relative à température ambiante située dans la plage de 1,33 à 1,48 g/cm³.

6. Procédé selon la revendication 5, dans lequel le bain d'acides mixte a une densité relative à température ambiante située dans la plage de 1,38 à 1,42 g/cm³.

7. Procédé selon la revendication 1, dans lequel les articles sont immergés dans le bain d'acides mixte à une température située dans la plage de 20 à 40°C sur une durée allant jusqu'à 60 minutes.

8. Procédé selon la revendication 7, dans lequel les articles sont immergés dans le bain d'acides mixte à une température située dans la plage de 25 à 35°C sur une durée allant de 5 minutes à 40 minutes.

9. Procédé selon la revendication 1, dans lequel la gravure est suivie d'une étape de neutralisation et de rinçage.

10. Procédé de plaquage d'articles en polyacétal comprenant la gravure des articles selon la revendication 1, suivie de l'application d'un plaquage directement sur la surface gravée.

11. Procédé de plaquage d'articles en polyacétal comprenant la gravure des articles selon la revendication 1, l'application d'un plaquage autocatalytique directement sur la surface gravée et l'application d'un plaquage électrolytique sur le dépôt autocatalytique.

12. Procédé de décoration d'articles en polyacétal comprenant la gravure des articles selon la revendication 1, suivie de l'application d'une peinture organique directement sur la surface gravée.

13. Procédé selon la revendication 12, comprenant l'application d'un revêtement de vernis de finition sur la peinture.

14. Procédé selon la revendication 12, suivi de l'étape d'application d'une couche métallique sur la peinture organique par déposition de métal sous vide.

15. Bain de gravure d'acides mixte pour la gravure de la surface d'articles en polyacétal pour préparer la surface pour des traitements ultérieurs, contenant les quatre acides suivants et de l'eau selon les quantités et les proportions suivantes:
28 à 39 % en poids d'acide sulfurique et 25 à 32 % en poids d'acide phosphorique, dans lequel le rapport en poids de l'acide sulfurique à l'acide phosphorique se situe dans la plage de 0,9 à 1,5;
3 à 10 % en poids d'acide chlorhydrique et 3 à 14 % en poids d'acide acétique, dans lequel le rapport en poids de l'acide chlorhydrique à l'acide acétique se situe dans la plage de 0,25 à 3,0; et
5 à 41 % en poids d'eau.

16. Bain selon la revendication 15, qui contient 32 à 36 % en poids d'acide sulfurique; 27 à 30 % en poids d'acide phosphorique, 4 à 6 % en poids d'acide chlorhydrique, 6 à 10 % en poids d'acide acétique et 18 à 31 % en poids d'eau.

17. Bain selon la revendication 15, dans lequel le rapport de l'acide sulfurique à l'acide phosphorique se situe dans la plage de 1,0 à 1,4, et le rapport de l'acide chlorhydrique à l'acide acétique se situe dans la plage de 0,4 à 1,0.

18. Bain selon la revendication 17, dans lequel le rapport de l'acide sulfurique à l'acide phosphorique se situe dans la plage de 1,1 à 1,3, et le rapport de l'acide chlorhydrique à l'acide acétique se situe dans la plage de 0,5 à 0,6.

19. Bain selon la revendication 15, ayant une densité relative à température ambiante située dans la plage de 1,33 à 1,48 g/cm³.

20. Bain selon la revendication 19, ayant une densité relative à température ambiante située dans la plage de 1,38 à 1,42 g/cm³.
